# EUROPEAN PATENT APPLICATION

(11) **EP 1 586 527 A1**
(43) Date of publication of application: **19.10.2005**
(21) Application number: 03779645.5
(22) Date of filing: 01.12.2003
(51) Int. Cl.: B66C 13/18, B66F 9/24, H02P 5/41

(54) **A RUBBER TYRED GANTRY CONTAINER CRANE WITH A SUPERCAPACITOR**

(30) Priority: 04.12.2002 CN 02151021
(71) Applicant: Shanghai Zhenhua Port Machinery Co. Ltd., Shanghai District, Shanghai 200125 (CN)
(72) Inventor: FEI, Guo, Shanghai 200125 (CN); GAO, Qing, Shanghai 200125 (CN)
(74) Representative: Bergmeier, Werner
(86) International application number: PCT/CN2003/001028
(87) International publication number: WO 2004/050531

(57) **Abstract**

The present invention relates to a rubber-tyred gantry container crane utilizing a supercapacitor, which comprises hoisting mechanism, trolley traverse and gantry travel. The three-phase AC current generated by the diesel generating set is converted to a DC electric power through a rectifying device of an AC transducer. The DC power is converted to a AC electric power, the frequent and voltage of which are controllable, through a frequency conversion device of a AC transducer, for driving the hoisting mechanism, gantry travel or trolley traverse. The supercapacitor is connected in parallel on a DC power bus, which monitors the scope of voltage change, and charges when voltage rises and discharges when voltage drops. With continuously discharging of the supercapacitor, its end voltage drops and the voltage of DC power bus follows to drop. When it is detected that this voltage is lower than the rectifying voltage of power of the diesel generating set, the diesel generating set starts participating in supplying electricity. When operating mechanism is at the state of regeneration-feedback, the mechanism feeds back the energy on DC bus, making the supercapacitor continuously absorb electric energy. The present invention utilizes the supercapacitor having great capacity, so as to charge and discharge in great current within a short period: quickly discharging in great current when starting and quickly charging in great current when dropping for absorbing energy and acting as function of saving energy and safeguarding environment.

## Description

### FIELD OF THE INVENTION

The present invention relates in general to a rubber-tyred gantry container crane, and in particular to a new type of rubber-tyred gantry container crane, which can discharge and charge in large capacity by utilizing a supercapacitor as a buffering power source and can save energy and safeguard environment.

### BACKGROUND OF THE INVENTION

The rubber-tyred gantry container crane (simply referred to as RTG in the following) is used as a main loading and unloading machine in stack-sites of a dock, mainly characterized in that containers having weight of 40~50 tones are frequently lifted or descended, started or braked. It need very large power to start and brake shortly within 2~3 seconds. Such large change of the load will bring the following disadvantageous states for the design, manufacture, operation and maintenance of the rubber-tyred gantry container crane:
A. Making the set capacity of the RTG become very large. Due to the requirements for operating in large power within such short time of the RTG, the set capacity of the RTG need to be larger than the stationary power of the set by one time. For instance, the motor power for lifting is 160 KW and for dolly is 25 KW for a RTG, with a speed of 20 m/min in full load state when lifting and a speed of 45 m/min in unload state. This means that the stationary power therefore is only about 185 KW. But in order to adapt the frequent start and brake of the RTG, it is required that the total dynamic power reaches 285 KW, so that the power of diesel generating set is larger enough than the power when operating in the most of time of the RTG by about 2/3. If the starting time is shortened, the set capacity will be larger than the stationary capacity even by one time. Accordingly when starting, the diesel must increase fuel flow to supply fuel quickly and in a great deal, accordingly leading to increasing diesel noise, incomplete combustion, exhausting black smoke so contaminating environment, simultaneously increasing fuel consumption and also increasing operating cost.
B. The energy of the RTG cannot be effectively utilized. During descent of hoisting mechanism and brake of other mechanisms, each mechanism can feed back a great lot of energy. Because the electric power of the RTG is independent and it fail to effectively connect other ground systems, the feedback energy of the mechanisms have to be consumed on the resistances, which are provided necessarily for the RTG The resistances send out heat to consume and waste energy, so increasing the heat contamination of the set.
C. The set operates not enough smoothly and has a large impact. Because the frequently starting and braking of the set causes large impact to load of the set, not only serious phenomena of emitting black smoke can be produced, but also the electric power system of the set has a large fluctuation, which can cause the electric equipments to be damaged and a certain disturbance to the machine and the communication systems in vicinity thereof.
D. Development of the RTG will be hindered. With increasing the technical specifications, such as normal load and speed, etc., the power of the set becomes large and selecting types of the set becomes also more and more difficult. This has gradually influenced the further development of the RTG

### SUMMARY OF THE INVENTION

In order to resolve the above problems, the task of the invention is to provide a new type of rubber-tyred gantry container crane utilizing a supercapacitor, i.e., utilizing a set of supercapacitors as a buffer power source, so can quickly charge and discharge in large electric current and achieve the purpose of saving energy and safeguarding environment.

The technical solution of the invention is as follows:

A rubber-tyred gantry container crane utilizing a supercapacitor (RTG) comprises the main work-mechanisms including a hoisting mechanism, a trolley traverse and a gantry travel; the hoisting mechanism consumes the electricity, which is supplied by the diesel generating set when lift-operating, and the potential energy is converted to the electric energy, which is fed back to the RTG when descending; and the trolley traverse and the gantry travel consume electricity when they are driven and operate, and feed back the electricity to the RTG..

The three-phase AC power supply, which is sent out by the diesel generating set is converted to a DC power supply through a rectifier of an AC transducer. The DC power supply is converted to AC power supply by a frequency-conversion device of the AC transducer, where the frequency and voltage are controllable, for driving the lifting, cart or trolley traverses.

The supercapacitor is connected in parallel on the DC power bus, by which the scope of voltage change is monitored, and charges when increasing voltage and discharges when decreasing voltage. With the continuously discharging of the supercapacitor, the end voltage decreases and the DC bus voltage decreases consequently. When it is detected that the voltage is lower than the power rectified voltage of the diesel generating set, the diesel generating set will start to participate in supplying electricity, and feed back the electric energy to the supercapacitor when braking. The supercapacitor continually is charged by the feedback energy and continually releases the electric energy.

When the operating mechanisms of the RTG are on the regeneration-feedback state, the mechanisms can feed back the energy to the DC bus, making DC voltage of the bus gradually increase within voltage change scope and supercapacitor continually absorbs the electric energy.

While the DC voltage is brought to be increased by the regeneration-feedback electric energy of the motors of the operating mechanisms, the supercapacitor comes into the charge state. With the continually charging of the supercapacitor, the end voltage thereof increases, leading to that the DC voltage of the bus correspondingly increases and the feedback energy of the all mechanisms are absorbed by the supercapacitor.

### BRIEF DESCRIPTION OF THE DRAWINGS

Fig. 1 is a schematic drawing showing an arrangement of an electric system for a rubber-tyred gantry container crane utilizing a supercapacitor according to the present invention;
Fig.2 is a principle drawing of supplying electricity by the supercapacitor of the RTG shown in Fig.1;
Fig.3 is a principle drawing of storing energy by the supercapacitor of the RTG shown in Fig. 1;
Fig.4 is a schematic drawing showing a circuit for monitoring the supercapacitor of the RTG.

### DESCRIPTION OF PREFERED EMBODIMENTS

The rubber-tyred gantry container crane is the special equipment for container's loading and unloading applied in the stack-site of a container-dock. It is an ambulatory machine without a stationary track and utilizes a diesel generation set own by itself to generate electricity to be used by the electro-equipment in the RTG. The electricity supplying system of the RTG and the electric system on ground of dock are completely insulated each other. A rubber-tyred gantry container crane has in generally three main action mechanisms, which are the hoisting mechanism, trolley traverse and gantry travel respectively. The hoisting mechanism is the main one of the RTG with power more than 200 KW for lifting and descending the containers. When lifting the hoisting mechanism consumes electricity, which is supplied by the diesel generating set and when descending containers the potential energy is converted to electric energy to feed back to the crane. This energy is typically about 200 KW. The dolly and gantry travels are the ones used for moving the containers in a plane (forward and backward or rightward and leftward), the power of which is smaller comparatively. These mechanisms consume electricity when driving and operating, but feed back the electric energy to the crane when braking. In practice, the operations of the RTG can be separated into two states: driving state where each mechanism consumes the energy of diesel generating set and regeneration-feedback state where each mechanism feeds back the energy to the crane. The traditional RTGs all consume this energy by braking resistance.

According to the present invention, a rubber-tyred gantry container crane utilizing a supercapacitor comprises the main work-mechanisms including a hoisting mechanism, a trolley traverse and a gantry travel; the hoisting mechanism consumes the electricity, which is supplied by the diesel generating set when lift-operating, and the potential energy is converted to the electric energy, which is fed back to the RTG when descending; and the trolley traverse and the gantry travel consume electricity when they are driven and operate, and feed back the electricity to the RTG..

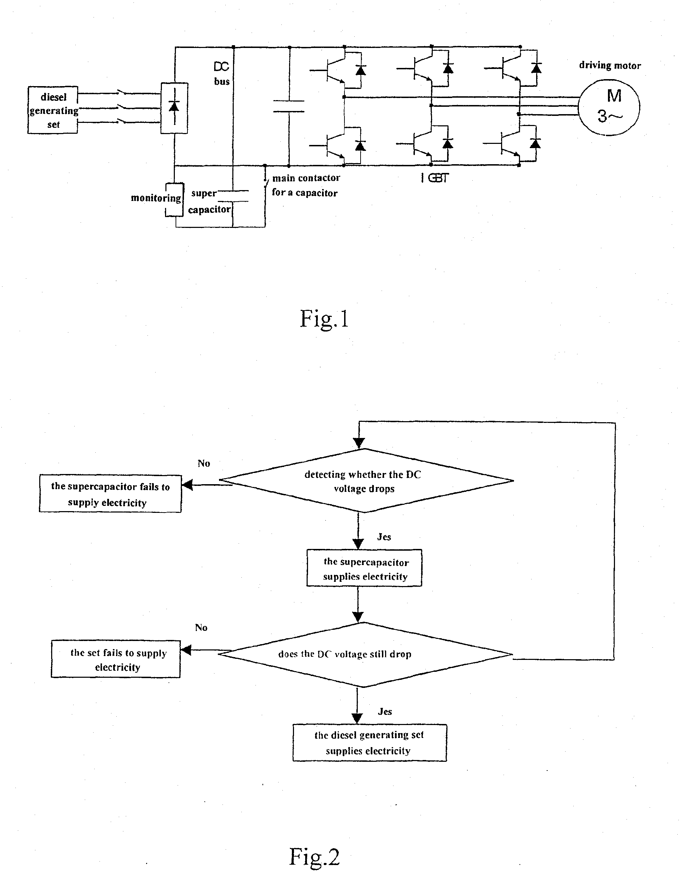

Referring to Fig.1, the RTG of the invention adopts the technology of frequency conversion driving, in which the AC power from the diesel generating set is rectified to DC power by an AC-DC conversion device of an AC transducer. The DC power is put on a bus. A set of supercapacitors is connected in parallel on the DC bus.

The three-phase AC power supply, which is sent out by the diesel generating set is converted to a DC power supply through a rectifier of an AC transducer. The voltage of this DC power supply is changed within the scope of 450V~715V. This DC power supply is converted to an AC power supply, the frequency and voltage of which is controllable, by a frequency conversion device (six IGBT combined bridges) of the AC transducer for driving the hoisting mechanism, gantry travel or trolley traverse.

As shown in fig.1, the supercapacitor is connected in parallel on a DC power supply bus, which monitors the scope of voltage-change, and charges when increasing voltage and decreasing voltage when discharging, so as to utilize the characteristic of charging and discharging in large electric current of the supercapacitor. It can automatically detect the state of utilizing the energy of the RTG that the supercapacitor is connected in parallel on the DC bus. When the mechanisms are on a driving state, where power is drawn from DC bus, the voltage of the DC bus presents a decreasing trend. Because the inside-resistance of the supercapacitor is far smaller than the one of the generator, the supercapacitor can first supply electricity to DC bus, so as to maintain the bus voltage. When the driving mechanism continues working and with the continuously discharging of the supercapacitor, the end voltage is gradually decreased and presents that voltage of the DC bus is decreased. Only when the DC voltage is decreased until it is smaller than the rectified voltage of the power supply of the generating set, the electric energy can be gradually used. Namely, when it is detected that this voltage is lower than the rectified voltage of the power supply of the diesel generating set, the diesel generating set will start participating to supply electricity.

Referring to Fig. 2, the supercapacitor is connected in parallel on the DC bus and automatically monitors DC voltage. If DC voltage fails to change, then the supercapacitor will be in ready state and does not work. When it is found that DC voltage is decreased (caused by consuming electricity of driving motor), the supercapacitor supplies electricity. In this moment, the current magnitude of the supplied electricity is determined automatically according to the load current magnitude. With continuously discharging of the supercapacitor, its end voltage is decreased and DC bus voltage is followed to be decreased. When it is detected that this voltage is lower than the rectified voltage of the power supply of the diesel generating set, the set also starts participating to supply electricity. In this way, more the energy is stored by the supercapacitor, then more it is released and smaller energy is consumed by the set, accordingly leading to that the influence to the set caused by suddenly increasing load of the crane is decreased, and the set participates to supply electricity under the state of steady load, decreasing the load of the set.

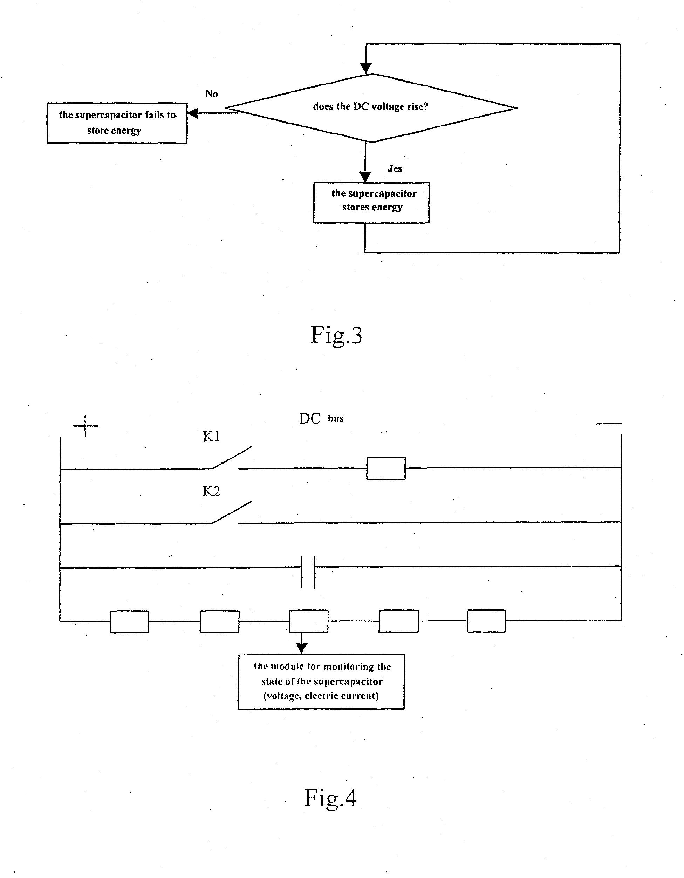

Referring to Fig.3, when the operating mechanisms of the RTG are under the state of regeneration-feedback, the set will feed back the energy to the DC bus. At the moment, the voltage of DC bus is gradually increased within the changing scope and the supercapacitor will bring into pay the characteristic that large power is stored within the short time, making the supercapacitor continuously absorb the electric energy.

The supercapacitor is connected in parallel on the DC bus and automatically monitors DC voltage. If DC voltage fails to change, then the supercapacitor is under ready state and does not work. When it is found that the DC voltage is increased (caused by regeneration-feedback of the motor of the operating mechanisms), the supercapacitor enters into the charging state. At the moment, the current magnitude of the charged electricity will be determined automatically according to the feedback energy magnitude. With the continuously charging of the supercapacitor, its end voltage will be increased and the voltage of DC bus is followed to be increased. Because the capacity of the supercapacitor provided on the RTG is very large, the fed back energy of all mechanisms will be absorbed by the supercapacitor.

In order to make the supercapacitor steadily and reliably operate, in the electric systems of the RTG according to the present invention is provided with a monitoring circuit of the supercapacitor.

Referring to Fig.4, a monitoring module is connected on the two ends of the supercapacitor and it monitors the voltage and current of the supercapacitor. The switches K1, K2 and charging resistances are connected in parallel on the two ends of the supercapacitor, so as to compose a circuit of restricting charge and discharge of the supercapacitor. When the voltage of the supercapacitor is too low and the current of discharging electricity is too small because the RTG stop operating for a long time or due to the other reasons, the switch K1 is turned on and the switch K2 is turned off, making the supercapacitor charge by the rectifying device of the diesel generating set. In order to avoid an impact to the diesel generating set caused by to large current of charging electricity, a resistance for restricting current R is connected in series in a circuit of switch K1 for restricting current of charging electricity. When monitoring module detects that the voltage of the supercapacitor is normal and the current of charging electricity is within the normal scope, the switch K1 is turned off and simultaneously the switch K2 is turned on, making the supercapacitor enter into the normal operating state.

During whole operation of the RTG the utilized supercapacitor continuously quickly charges and discharges. The charge and discharge of the supercapacitor is a physical change rather than a chemical change, therefore, it is different from the storage battery, having no contamination to environment and having also a very long natural life.

Considering the different characteristic of the supercapacitors, the RTG according to the present invention mix-utilizes the following supercapacitors having two different characteristics:

The first is a traction type of capacitor, characterized in the smaller current of charging and discharging electricity and steady current. The data of typical traction type of capacitors are as follows:
A. A assembly, adopting each ten monomers as a group, targets of which are as follows:

| | |
|---|---|
| capacity of static electricity | 100000F |
| the allowed most highest voltage of charged electricity | 17V |
| stored energy within the scope of the operating voltage | 266Wh |
| inside resistance | 5mΩ |

B. Combination of 450 assemblies:

| | |
|---|---|
| capacity | 222F |
| scope of operating voltage | 720~360V |
| the allowed most highest voltage of charged electricity | 760V |
| stored energy within the scope of the operating voltage | 12KWh |
| inside resistance | 0.225Ω |

The second is a starting type of supercapacitor, characterized in the specially large current of discharged electricity, short time and smaller durative force, long loading time and very small capability of charging and discharging. The data of the typical starting capacity are as follows:
a. Assembly:

| | |
|---|---|
| capacity of static electricity | 2600F |
| operating voltage | 28V |

b. Combination of 450 assemblies:

| | |
|---|---|
| capacity | 100F |
| scope of operating voltage | 720~460V |
| the allowed most highest voltage of charged electricity | 840V |
| stored energy within the scope of the operating voltage | 3.5KWh |
| inside resistance | 0.1Ω |

### INDUSTRIAL ADAPTIVE APPLICATIONS

The RTG According to the present invention utilizes a set of large capacity of supercapacitors, which are connected in parallel on the DC bus of the AC transducer and can accelerate charging and discharging of large current: quickly discharging in large current when the RTG consume electricity during driving, while quickly charging in large current when generating electricity during regeneration-feedback for absorbing energy.

Theoretically, for each mechanism the required energy is equal to the energy fed back to capacitors (if the efficiency is not calculated). Therefore, the diesel generating set equipped with the RTG possesses the advantages that the power can be largely decreased, the fuel consumption is lowed, the economic property is good, the diesel set can avoid to be impacted, smoothly operate, the noise and exhaust emission be lowed and have no black smoke, so as to have the good effect of safeguarding environment. Therefore, it refers as to a safeguarding environment type of the RTG.

It can be achieved by utilizing supercapacitor to charge and discharge to a driving system in large capacity during all process of lifting and descending of the hoisting mechanism of RTG and starting and braking progress of other mechanisms to effectively store the energy fed back when the hoisting mechanism descends and braking energy of the trolley traverse and also discharge when hoisting mechanism lifts and other mechanism operates, especially to decrease the impact, which is imposed to the electric systems of the RTG by frequently accelerating and decelerating of the hoisting mechanism.

The merits of utilizing the supercapacitors are as follows: the braking resistance of the conventional RTG is unnecessary and can be abrogated; the supercapacitors retain energy fed back by the all mechanisms, so that the supercapacitors charge to avoid heat-consuming of the original braking resistance and achieve the purpose of saving energy.

The new-type of RTG, which can save energy and safeguard environment can effectively decrease its set capacity, reduce contaminant of "three-waste" and hot contaminant to the environment and save the energy-consuming resistance, which is necessary for the conventional RTG, so as to improve the smoothly operating of the electric systems of the RTG Its effect for safeguarding environment is notable and the social and economic efficiencies are improved evidently.

In particular, the present invention possesses the following merits:
A. Reducing the contamination to the environment to achieving the purpose of safeguarding environment, specifically reflecting in the following three respects:
   a. Due to utilizing supercapacitors, the set capacity is minished and fuel consumptions, noise and heat are decreased enormously.
   b. Because the super capacitors compensate the requirements to energy when the hoisting mechanisms ascend, the set can operate smoothly and it can not take place that various containments of exhaust gases, waste oils and noise, which are produced during power regulating when the conventional RTG rises and starts, downright eliminate black smoking when diesel is lift-accelerated and reduce the noise of diesel greatly.
   c. Because the supercapacitors have the function of storing energy when starting, rising and descending, the fed back energy of hoisting mechanisms can be stored when descending, rather than need braking resistance, so that the heat-consuming caused by the energy through the resistance is greatly reduced, failing to produce the hot-containment to the environment.
B. Retaining the energy when the hoisting mechanism descends and the cart and the dolly brakes, so having the function of saving energy. Because the conventional RTG does not have the elements for storing energy, the fed back energy, which is produced by the RTG is consumed by the resistance consuming energy, which is fixed on the crane, when the hoisting mechanism descends or the cart and dolly brakes, accordingly wasting the energy source. The RTG can store the energy by the characteristic that the supercapacitors store and release energy enormously, and then consume the energy when it is driven, therefore achieving the purpose of saving energy.
C. Minishing the installed capacity of the RTG Because the supercapacitors supplement the most part of currents to DC power bus within the time period of acceleration when the hoisting mechanism rises, so as to minish the requirement of the hoisting mechanism on the power of the set. Accordingly chooses of set power are reduced in comparison to the conventional RTG when make design, so as to save the cost of the users.
D. It is in favor of the development of the RTG to adopt the new type of the RTG, which can save energy and protect environment. Due to using the supercapacitors, the factor that the set capacity is limited existing in the development of the RTG can be overcome, making for the manufactures and users develop the RTG having larger capacity and higher speed.

## Claims

1. A rubber-tyred gantry container crane utilizing a supercapacitor (RTG) comprises the main work-mechanisms including a hoisting mechanism, a trolley traverse and a gantry travel; the hoisting mechanism consumes the electricity, which is supplied by the diesel generating set when lift-operating, and the potential energy is converted to the electric energy, which feeds back to the RTG when descending; and the trolley traverse and the gantry travel consume electricity when they are driven and operate, and feed back the electricity to the RTG.;
**characterized in that**:
the three-phase AC power supply, which is sent out by the diesel generating set is converted to a DC power supply through a rectifier of an AC transducer; the DC power supply is converted to AC power supply by a frequency-conversion device of the AC transducer, where the frequency and voltage are controllable, for driving the lifting, cart or trolley traverses;
the supercapacitors are connected in parallel in the DC power bus and charge when increasing voltage and discharge when decreasing voltage; with the continuously discharging of the supercapacitors, the end voltage decreases and the DC bus voltage decreases consequently; when detecting that the voltage is lower than the power rectified voltage of the diesel generating set, the diesel generating set will start to participate in supplying electricity, and when braking feeds back the electric energy to the supercapacitors. The supercapacitors continually are charged by the feedback energy and continually release the electric energy;
when the operating mechanisms of the RTG are on the regeneration-feedback state, the mechanisms can feed back the energy to the DC bus, making DC voltage of the bus gradually increase within voltage change scope and supercapacitors continually absorb the electric energy;
while the DC voltage is brought to increase by the regeneration-feedback electric energy of the motors of the operating mechanisms, the supercapacitors come into the charge state; with the continually charging of the supercapacitors, the end voltage thereof increases, leading to that the DC voltage of bus correspondingly increases and the feedback energy of the all mechanisms are absorbed by the supercapacitors.

2. The rubber-tyred gantry container crane utilizing a supercapacitor of claim 1, wherein a monitoring module is connected between two ends of the supercapacitor, which monitors the voltage and the electric current of the supercapacitor; switches K1, K2 and charging resistance are connected in parallel also between the two ends of the supercapacitor.

3. The rubber-tyred gantry container crane utilizing a supercapacitor of claim 1, wherein a resistance for restricting current R is connected in series the circuit of said switch K1, which restrict the charging current.
